# FASCICULE DE BREVET EUROPEEN

(11) **EP 1 769 958 B1**
(45) Date de publication et mention de la délivrance du brevet: **11.11.2009**
(21) Numéro de dépôt: 06121588.5
(22) Date de dépôt: 29.09.2006
(51) Int. Cl.: B60J 7/00

(54) **Store à enrouleur pour véhicule automobile à baleines à section en arc de cercle, et véhicule correspondant**
Sonnenschutzrollo für Kraftfahrzeuge mit halbkreisförmigen Spriegeln
Roller blind for automotive vehicles having semicircular supports

(30) Priorité: 30.09.2005 FR 0510044
(43) Date de publication de la demande: 04.04.2007
(73) Titulaire: Wagon SAS, 79302 Bressuire Cédex (FR)
(72) Inventeur: Fourel, Pascal, 35400 Saint-Malo (FR)
(74) Mandataire: Bioret, Ludovic

(56) Documents cités:
- EP-A- 1 669 232
- GB-A- 828 513
- US-A- 2 973 990

## Description

### 1. Domaine de l'invention

Le domaine de l'invention est celui des véhicules automobiles, et plus précisément de l'occultation des surfaces vitrées de véhicules automobiles.

Plus précisément encore, l'invention concerne les stores à enrouleurs utilisés dans les véhicules automobiles et équipés de baleines destinées à les maintenir dans une position souhaitée.

### 2. Solutions de l'art antérieur

Des dispositifs d'occultation sont prévus depuis longtemps pour les surfaces vitrées de véhicules. En effet, les surfaces vitrées des véhicules automobiles peuvent causer des problèmes relatifs à la température à l'intérieur du véhicule, la discrétion ou l'éblouissement. Ces dispositifs d'occultation sont rendus encore plus nécessaires avec l'apparition des pavillons de véhicule vitrés, qui augmentent sensiblement la surface vitrée du véhicule.

Des stores à enrouleur sont couramment prévus pour occulter ces surfaces vitrées. Ils présentent en effet l'avantage d'occuper peu de place quand ils sont repliés et d'être faciles à manipuler, manuellement ou de façon motorisée.

Les stores à enrouleur peuvent également être utilisés dans d'autres parties des véhicules automobiles. Ils sont par exemple utilisés comme cache-bagages, ou pour compartimenter l'espace dans le véhicule. La présente invention s'applique également à de tels stores.

Certains stores utilisés dans les véhicules automobiles sont renforcés par des baleines. Ces baleines permettent de rigidifier le store, et, le cas échéant, de lui donner une forme. Il est ainsi possible d'imprimer un galbe à la toile du store, par exemple pour lui permettre d'épouser la forme d'une surface vitrée galbée. Ces baleines sont par exemple nécessaires pour que la toile déployée suive la forme galbée d'un pavillon, comme montré dans le document US 2973990.

Les stores à enrouleurs équipés de baleines présentent cependant de nombreux inconvénients. En effet, les baleines étant plus épaisses que la toile, elles entraînent des surépaisseurs dans la toile. Il est donc nécessaire, notamment, d'élargir la taille de la fente de passage de la toile dans le boîtier du tube enrouleur, ce qui entraîne un risque que de la poussière pénètre dans ce boîtier.

En outre, les surépaisseurs de la toile, dues à la présence des baleines, ont généralement pour conséquence un mauvais enroulement de la toile autour du tube enrouleur, avec des effets de balourd. En effet, la présence des baleines déforme l'enroulement de la toile, qui n'est alors plus régulier.

Un autre inconvénient majeur est que cet enroulement prend beaucoup de place, et entraîne un encombrement supplémentaire du boîtier du tube enrouleur. Pour minimiser cet encombrement, il est nécessaire de réduire le nombre de baleines sur la toile, et de disposer les baleines de façon à ce que les surépaisseurs qu'ils engendrent lors de l'enroulement se répartissent équitablement autour du tube enrouleur.

Il est donc nécessaire de limiter le nombre des baleines, ce qui empêche la mise en oeuvre de stores ayant une rigidité importante, et ou des formes particulières imprimées par les baleines.

De plus, les baleines, lorsque le store est enroulé, sont pressées contre la toile du store. Elles peuvent alors marquer la toile, ce qui a des conséquences dommageables sur l'esthétique du store, quand il est déployé.

Le document W02006079332 est un document intercalaire, faisant partie de l'art antérieur au titre de l'article 54(3) CBE. Il décrit un store muni de renforts latéraux aptes à coulisser entre deux rails de guidage, et présentant une forme de V, dont la section concave est orientée en opposition par rapport à la toile.

### 3. Objectifs de l'invention

L'invention a notamment pour objectif de pallier ces inconvénients de l'art antérieur.

Plus précisément, un objectif de l'invention est de fournir un store équipé de baleines pouvant s'enrouler de façon efficace.

De façon particulière, l'invention a pour objectif de fournir un tel store à enrouleur qui occupe, dans sa position enroulée, un volume réduit.

L'invention a également pour objectif de fournir un tel store offrant une rigidité suffisante dans sa position déployée.

Un autre objectif de l'invention est d'obtenir de façon particulièrement simple un galbe de la toile d'un store à enrouleur, si cela est nécessaire.

Encore un autre objectif de l'invention est de fournir un tel store qui soit particulièrement simple et peu coûteux à la fabrication, et très simple d'utilisation.

### 4. Exposé de l'invention

Ces objectifs, ainsi que d'autres qui apparaîtront par la suite, sont atteints à l'aide d'un store à enrouleur selon la revendication 1.

En d'autre termes, la section transversale (par opposition à une section longitudinale) définit un arc de cercle.

Cette approche permet d'exploiter le moment d'inertie conféré par l'arc de cercle (ou plus généralement arc), tout en permettant un enroulement efficace. Les lames peuvent en effet être très peu épaisses.

Il est à noter que l'on a déjà proposé des baleines de section incurvée. Cependant, selon les techniques connues, le bossage était orienté vers l'extérieur, et la solidarisation était assurée par les bords (ou par un système d'ourlet ou d'enrobage. Selon l'invention en revanche, la baleine est retournée, et solidarisée à la toile par le sommet du bossage.

De façon préférentielle, la ou lesdites lames de renfort sont mobiles en basculement autour de ladite partie centrale.

Avantageusement, la ou lesdites lames de renfort présentent une section de profil défini et/ou variable de façon à épouser la forme de la toile enroulée sur ledit tube enrouleur, lors du repli de ladite toile.

Ceci permet de faciliter l'enroulement, les lames pouvant épouser sensiblement la forme imposée par le tube enrouleur. Les baleines ainsi formées ne posent pas de problème de déformation de l'enroulement ni de balourd, et il est possible d'en prévoir un nombre relativement important (par rapport aux baleines classiques).

De façon préférentielle, chacune desdites lames de renfort est fixée à ladite toile par collage d'une zone de fixation sensiblement linéaire s'étendant sur au moins une partie de la longueur de ladite partie centrale de la lame de renfort.

Bien sûr, d'autres modes de fixation (soudure, couture, clipsage...) sont envisageables.

Avantageusement, la ou lesdites lames de renfort sont réalisée en un matériau déformable, et par exemple en métal ou en PVC.

Elles peuvent également être rigides, et fabriquées en tout matériau adéquat, tel que du carbone.

Selon un mode de réalisation particulier de l'invention, au moins une desdites lames de renfort est montée en contrainte sur ladite toile d'occultation de façon à imprimer un galbe à ladite toile d'occultation, lorsqu'elle est déployée.

Cette technique permet d'obtenir de façon simple et rapide le galbe souhaité.

Notamment, ladite lame de renfort peut être collée à ladite toile d'occultation alors qu'elle est contrainte dans une forme galbée et/ou que ladite toile d'occultation est tendue.

Un tel store à enrouleur peut en particulier être utilisé pour l'une des applications appartenant au groupe comprenant :
- occultation du pavillon dudit véhicule ;
- occultation de la vitre de custode dudit véhicule ;
- occultation d'une vitre latérale dudit véhicule ;
- cache-bagages.

L'invention concerne également les véhicules automobiles équipés d'au moins un store à enrouleur tel que décrit ci-dessus.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente une vue schématique d'un store selon un mode de réalisation de l'invention ;
- les figures 2A et 2B représentent en vue de coupe une lame de renfort et une portion de la toile du store de la figure 1, respectivement en position déployée et en position enroulée ;
- la figure 3 illustre un principe de galbage des lames de l'invention.

### 6. Description détaillée de l'invention

Le principe général de l'invention repose sur la mise en oeuvre d'une ou plusieurs lames flexibles de renfort de la toile du store présentant un moment d'inertie important, suffisant pour maintenir la toile malgré une faible épaisseur des lames.

On exploite ainsi, en position déployée, le moment d'inertie procuré par le profil incurvé. On peut noter que cette approche est similaire à celle des mètres à ruban.

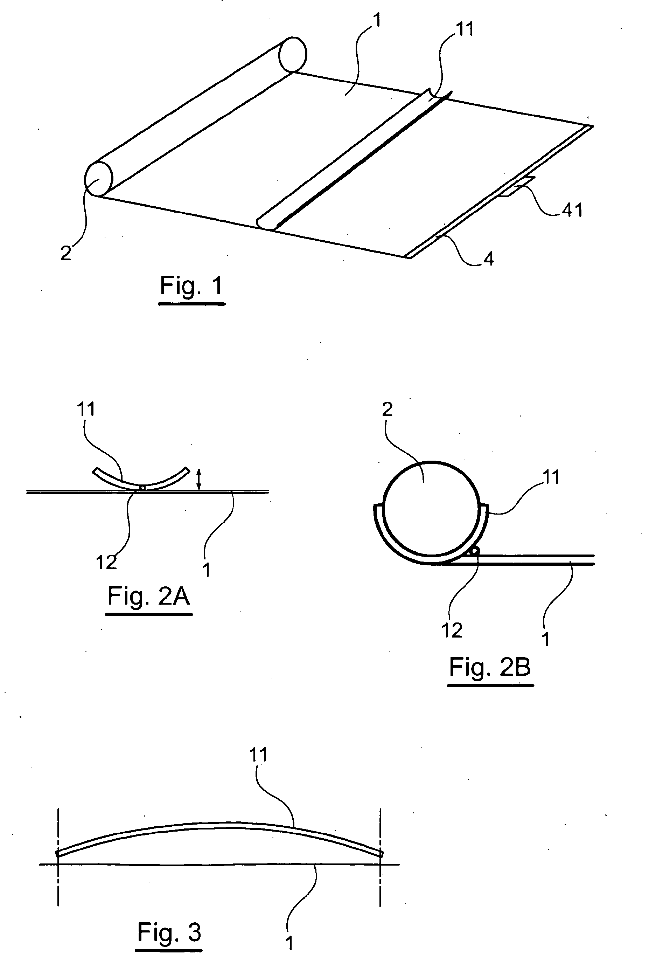

La figure 1 représente de façon simplifiée un store à enrouleur selon l'invention, comprenant une toile 1 montée sur un tube enrouleur 2. Le tube enrouleur est par exemple monté dans une cassette ou un logement prévu à cet effet, non représenté sur la figure 1. L'extrémité de la toile 1 qui n'est pas montée sur le tube enrouleur est solidarisée à une barre de tirage 4, qui peut être manipulée par une poignée 41. Le dispositif peut également être motorisé.

Une ou plusieurs lames 11 sont solidarisées à la toile 1 du store. Ces lames 11 sont disposées sur la toile 1 dans une direction parallèle à l'axe du tube d'enroulement 2.

Les lames 11 sont constituées d'un ruban d'un matériau flexible. Par exemple, ces lames peuvent être avantageusement constituées d'un ruban d'acier d'environ 10 à 30 millimètres de largeur et environ 0,1 à 0,5 millimètre d'épaisseur. Cette faible épaisseur ne perturbe pas la qualité de l'enroulement.

La figure 2A présente une section, perpendiculaire à la plus grande longueur de la lame, d'une des lames de renfort 11 solidarisée à la toile 1, dans la position déployée de la toile 1. Comme on peut le voir sur cette figure, la lame 11 a, dans cette position de la toile, une forme d'arc de cercle, ou plus généralement d'arc. Cette forme est la forme naturelle de la lame 11, quand elle n'est soumise à aucune contrainte.

Cette forme présente l'avantage que, malgré la faible épaisseur de la lame 11, son moment d'inertie est très important. La lame présente donc alors une rigidité importante, ce qui lui permet de constituer une baleine rigide malgré la souplesse du matériau qui la compose et sa faible épaisseur.

Lors du repli de la toile, et de son enroulement sur le tube 2, la lame 11 épouse le profil défini par ce tube, et le cas échéant les tours de toile déjà enroulées, comme illustré par la figure 2B. Avantageusement, la lame est suffisamment souple pour que son profil puisse varier en fonction des besoins.

La lame 11 est donc solidarisée à la toile 1 par collage sur une zone de collage 12, qui est située sur la face extérieure la lame 11, sensiblement au milieu de l'arc de cercle formé par celle-ci. La lame est ainsi collée à la toile sur toute sa longueur. La toile, n'étant collée à la lame que le long d'une ligne, n'épouse pas la forme d'arc de cercle de la lame, et n'est donc pas déformée.

Par ailleurs, la liaison étant uniquement centrale, la lame peut basculer, pour venir épouser le tube lors de l'enroulement (figure 2B).

D'autres modes de fixation sont bien sûr possibles.

La toile n'est pas, ou peu, marquée par ces lames très fines, et il n'y a pas de problèmes de répartition des baleines autour du tube enrouleur. Il est du coup possible de solidariser à la toile un grand nombre de lames de renfort, supérieur au nombre des baleines sur les stores de l'art antérieur

Comme illustré par la figure 3, il est possible d'exploiter la souplesse de la lame pour imprimer à la toile 1 un galbe, par exemple pour suivre le galbe d'un pavillon vitré. Il suffit d'effectuer un collage, ou plus généralement un assemblage, en contrainte.

Dans le mode de réalisation de la figure 3, on effectue un collage en tension, en courbant la lame 11, la toile 1 étant maintenue plane. Lorsque le collage sera terminé, la lame forcera la toile à prendre un galbe selon la courbe selon laquelle elle a été contrainte.

Un résultat similaire peut être obtenu en tendant la toile 1, avant d'y coller la lame 11. En se relâchant, la toile prendra également une forme galbée. Bien sûr, la lame et/ou la toile restent suffisamment déformable pour permettre un enroulement plan.

## Revendications

1. Store à enrouleur pour véhicule automobile, comportant une toile d'occultation (1) montée sur un tube enrouleur (2) et solidaire d'au moins une baleine,
**caractérisé en ce que** chacune desdites baleines est une lame de renfort (11) présentant, au moins dans une position déployée de ladite toile d'occultation (1), une section perpendiculaire à la plus grande longueur de ladite lame en forme d'arc de cercle, un contact entre chacune desdites lames de renfort (11) et ladite toile (1) étant assuré essentiellement par la partie centrale de la face extérieure dudit arc de cercle formé par ladite lame de renfort (11),
et **en ce que** chacune desdites lames de renfort (11) est fixée à ladite toile (1) par collage d'une zone de fixation (12) sensiblement linéaire s'étendant sur au moins une partie de la longueur de ladite partie centrale de la lame de renfort.

2. Store à enrouleur selon la revendication 1, **caractérisé en ce que** la ou lesdites lames de renfort (11) sont mobiles en basculement autour de ladite partie centrale.

3. Store à enrouleur selon la revendication 2, **caractérisé en ce que** la ou lesdites lames de renfort (1) présentent une section de profil défini et/ou variable de façon à épouser la forme de la toile enroulée sur ledit tube enrouleur (2), lors du repli de ladite toile (1).

4. Store à enrouleur selon l'une quelconque des revendications 1 à 3, **caractérisé en ce que** la ou lesdites lames de renfort (1) sont réalisées en un matériau déformable.

5. Store à enrouleur selon l'une quelconque des revendications des revendications 1 à 4, **caractérisé en ce qu'**au moins une desdites lames de renfort (11) est montée en contrainte sur ladite toile d'occultation (1) de façon à imprimer un galbe à ladite toile d'occultation (1), lorsqu'elle est déployée.

6. Store à enrouleur selon la revendication *5*, **caractérisé en ce que** ladite lame de renfort (11) est collée à ladite toile d'occultation (1) alors qu'elle est contrainte dans une forme galbée et/ou que ladite toile d'occultation (1) est tendue.

7. Store à enrouleur selon l'une quelconque des revendications 1 à 6, **caractérisé en ce qu'**il est utilisé pour l'une des applications appartenant au groupe comprenant :
- occultation du pavillon dudit véhicule ;
- occultation de la vitre de custode dudit véhicule ;
- occultation d'une vitre latérale dudit véhicule ;
- cache-bagages.

8. Véhicule automobile équipé d'au moins un store à enrouleur selon l'une quelconque des revendications 1 à 7.

## Claims

1. Roller blind for an automobile vehicle, comprising an occultation cloth (1) mounted on a roller tube (2) and integral with at least one bow,
**characterized in that** each of the said bows is a reinforcement strip (11) having, at least in a deployed position of the said occultation cloth (1), a section perpendicular to the greatest length of the said strip in the form of a circular arc, a contact between each of the said reinforcement strips (11) and the said cloth (1) being ensured essentially by the central part of the exterior face of the said circular arc formed by the said reinforcement strip (11)
and **in that** each of the said reinforcement strips (11) is fixed to the said cloth (1) by glueing of a substantially linear fixing zone (12) extending over at least a part of the length of the said central part of the reinforcement strip.

2. Roller blind according to Claim 1, **characterized in that** the said reinforcement strip or strips (11) are mobile by tipping about the said central part.

3. Roller blind according to Claim 2, **characterized in that** the said reinforcement strip or strips (11) have a section of defined and/or variable profile so as to conform in shape to the cloth rolled on the said roller tube (2), when the said cloth (1) is folded.

4. Roller blind according to any of Claims 1 to 3, **characterized in that** the said reinforcement strip or strips (11) are made from a deformable material.

5. Roller blind according to any of the claims of claims 1 to 4, **characterized in that** at least one of the said reinforcement strips (11) is mounted under stress on the said occultation cloth (1) so as to impress a curve to the said occultation cloth (1), when it is deployed.

6. Roller blind according to Claim 5, **characterized in that** the said reinforcement strip (11) is glued to the said occultation cloth (1) when it is stressed in a curved form and/or when the said occultation cloth (1) is taut.

7. Roller blind according to any of Claims 1 to 6, **characterized in that** it is used for one of the applications belonging to the group comprising:
- occultation of the roof of the said vehicle;
- occultation of the rear quarter window of the said vehicle;
- occultation of a side window of the said vehicle;
- luggage space cover.

8. Automobile vehicle equipped with at least one roller blind according to any of Claims 1 to 7.

## Patentansprüche

1. Rollo für Kraftfahrzeug, das ein Verdunkelungstuch (1) aufweist, das auf eine Wickelwelle (2) montiert und fest mit mindestens einem Spriegel verbunden ist,
**dadurch gekennzeichnet, dass** die Spriegel aus einer Verstärkungsklinge (11) bestehen, die in mindestens einer aufgebreiteten Position des Verdunkelungstuchs (1) einen Abschnitt senkrecht zu der größten Länge der Klinge in Kreisbogenform aufweist, wobei eine Berührung zwischen jeder der Verstärkungsklingen (11) und dem Tuch (1) im Wesentlichen durch den zentralen Teil der Außenseite des Kreisbogens, der von der Verstärkungsklinge (11) gebildet wird, sichergestellt wird,
und dass jede der Verstärkungsklingen (11) an dem Tuch (1) durch Kleben einer im Wesentlichen linearen Befestigungszone (12), die sich auf mindestens einem Teil der Länge des zentralen Teils der Verstärkungsklinge erstreckt, befestigt ist.

2. Rollo nach Anspruch 1, **dadurch gekennzeichnet, dass** die eine oder mehreren Verstärkungsklingen (11) kippend um den zentralen Teil beweglich sind.

3. Rollo nach Anspruch 2, **dadurch gekennzeichnet, dass** die eine oder mehreren Verstärkungsklingen (11) einen definierten und/oder variablen Profilquerschnitt derart aufweisen, dass sie sich beim Aufrollen des Tuchs (1) an das auf der Wickelwelle (2) aufgerollte Tuch schmiegen.

4. Rollo nach einem der Ansprüche 1 bis 3, **dadurch gekennzeichnet, dass** die eine oder mehreren Verstärkungsklingen (11) aus einem verformbaren Material hergestellt sind.

5. Rollo nach einem der Ansprüche 1 bis 4, **dadurch gekennzeichnet, dass** mindestens eine der Verstärkungsklingen (11) unter Belastung auf das Verdunkelungstuch (1) derart montiert ist, dass dem Verdunkelungstuch (1), wenn es aufgebreitet wird, eine Wölbung verliehen wird.

6. Rollo nach Anspruch 5, **dadurch gekennzeichnet, dass** die Verstärkungsklinge (11) an das Verdunkelungstuch (1) geklebt wird, während sie in einer gewölbten Form belastet ist und/oder dass das Verdunkelungstuch (1) gespannt ist.

7. Rollo nach einem der Ansprüche 1 bis 6, **dadurch gekennzeichnet, dass** es für eine der Anwendungen verwendet wird, die zu der folgenden Gruppe gehören:
- Verdunkeln des Himmels des Fahrzeugs;
- Verdunkeln der Dreieckscheibe des Fahrzeugs;
- Verdunkeln einer Seitenscheibe des Fahrzeugs;
- Gepäckabdeckung.

8. Kraftfahrzeug, das mit mindestens einem Rollo nach einem der Ansprüche 1 bis 7 ausgestattet ist.
